# EUROPÄISCHE PATENTANMELDUNG

(11) **EP 4 057 194 A1**
(43) Veröffentlichungstag der Anmeldung: **14.09.2022**
(21) Anmeldenummer: 22159591.1
(22) Anmeldetag: 02.03.2022
(51) Int. Cl.: G06Q 10/00

(54) **VORRICHTUNG UND VERFAHREN ZUR ÜBERWACHUNG EINES FLUGZEUGZUSTANDES**

(30) Priorität: 09.03.2021 DE 102021202242
(71) Anmelder: MTU Aero Engines AG, 80995 München (DE)
(72) Erfinder: Hasch, Bernd, 80995 München (DE)

(57) **Zusammenfassung**

Die Erfindung betrifft ein Verfahren bei welchem ein erster Zustand auf Basis eines ersten Modells und auf Basis von Information aus einem Flugzeug bestimmt wird, wobei der erste Zustand in einem ersten Computer bestimmt wird, der in dem Flugzeug angeordnet ist. Information über den ersten Zustand werden zu einem zweiten Computer gesendet, der außerhalb des Flugzeugs angeordnet ist. Ein zweiter Zustand wird auf Basis eines zweiten Modells und der Informationen aus dem Luftfahrzeug und/oder auf Basis der Informationen über den ersten Zustand durch den zweiten Computer bestimmt.

## Beschreibung

Die vorliegende Offenbarung betrifft Vorrichtungen und Verfahren zur Überwachung eines Zustandes eines Flugzeuges.

Heutige Life Usage Monitoring, LUM, Systeme lassen sich in zwei verschiedene Klassen differenzieren. Zum einen gibt es LUM Systeme, welche autark an Bord eines Luftfahrzeugs betrieben werden. Dabei müssen Änderungen am Luftfahrzeug, beispielsweise Triebwerksmodifikationen, in Software entsprechend abgebildet werden und diese Software an Bord des Luftfahrzeugs entsprechend auf einem aktuellen Stand gehalten werden. Typischerweise werden die Informationen, die bei diesen sogenannten Onboard-LUM-Systemen verarbeitet werden, nicht im Rahmen einer retrospektiven Bewertung weiter verwertet. Insbesondere für technische Auswertungen liegen allein die Ergebnisse des Verfahrens vor. Die Rohdaten werden im Allgemeinen nicht weiterverwendet. Für bauteilübergreifende, beispielsweise triebwerksübergreifende Verallgemeinerungen und Schlussfolgerungen werden die verfügbaren Daten ebenfalls nicht verwendet.

Zum anderen gibt es sogenannte Offboard-LUM-Systeme. Dabei handelt es sich um Systeme, welche nicht im Luftfahrzeug betrieben werden. Dadurch ist das Luftfahrzeug abhängig von den am Boden installierten Informationstechnologiesystem. Physische Triebwerksmodifikationen werden in entsprechenden Modellen in einer Software abgebildet. Diese Modelle müssen dementsprechend auch außerhalb des Luftfahrzeugs gepflegt werden. Dies ist in der Regel einfacher möglich als bei einem Onboard-LUM-System. Die Rohdaten sind für technische Auswertungen leichter zugänglich. Eine Aktualisierung eines Datenbestands in einem Logistiksystem kann ebenfalls zeitversetzt passieren. Auch sind bei einer Aktualisierung einer Software im Vergleich zu einem Onboard-LUM-System weniger Firmen, und behördenübergreifende Schnittstellen zu berücksichtigen. Für benachbarte Triebwerksüberwachungsdisziplinen sind die verfügbaren Daten ebenfalls verwendbar. Eine Software ist auf wenigen Bodenstationen oder gar einer zentralen Instanz zu pflegen. Dadurch ist in der Regel ein Betreuungsaufwand durch einen Nutzer im Vergleich zu einem Onboard-System geringer. Dennoch weisen auch Offboard-Systeme Nachteile auf. Insbesondere verliert das Luftfahrzeug einen Teil seiner Autarkie. Verbesserungen in diesen Bereichen sind wünschenswert.

Hiervon ausgehend ist es eine Aufgabe der vorliegenden Erfindung, ein Life Usage Monitoring eines Fahrzeugs, insbesondere eines Luftfahrzeugs, zu verbessern. Diese Aufgabe wird durch die Erfindung gelöst, welche durch die Gegenstände der unabhängigen Ansprüche definiert ist. Die abhängigen Ansprüche betreffen entsprechende Weiterbildungen. Im Folgenden werden verschiedene Aspekte und Ausführungsformen dieser Aspekte offenbart, die zusätzliche Merkmale und Vorteile bereitstellen.

Einige Ausführungsformen lösen die spezielle Aufgabe, ein Triebwerk eines Flugzeugs sowohl onboard als auch offboard bezüglich seiner Gebrauchszeit und des Gebrauchs zu überwachen. Dazu wird ein Modell, insbesondere eine Berechnungsvorschrift oder ein Algorithmus, eines Triebwerks im Flugzeug (onboard) betrieben und ein weiteres Modell außerhalb des Flugzeugs (offboard). Das im Flugzeug betriebene Triebwerksmodell wird in Echtzeit mit den aktuellen Triebwerksinformationen und/oder Fluginformationen gespeist. Aufgrund der erhöhten Anforderungen für Flugzeugsoftware wird es in seiner Komplexität jedoch beschränkt und kann mehrere Triebwerksbauzustände abdecken. Das offboard betriebene Model ist hingegen wesentlich umfangreicher ausgebildet als das oder die Triebwerksmodelle im Flugzeug. Beispielsweise dient das Offboard-Modell zur Modellierung einer Vielzahl von Triebwerken, insbesondere in verschiedenen Flugzeugen. Das Offboard-Modell erhält vorprozessierte Daten eines oder mehrerer Onboard-Modelle und/oder Triebwerksinformationen und/oder Fluginformationen als Rohdaten. Auch das Offboard-Model kann im Echtzeitmodus betrieben werden. Vorteilhaft können durch diese Struktur Wartungen einzelner Triebwerke besser geplant werden. Bspw. können Triebwerke mit geringer oder keiner Restlaufzeit schneller entdeckt werden.

Ein erster Aspekt betrifft ein Verfahren, umfassend die Schritte:
- Bestimmen eines ersten Zustandes auf Basis eines ersten Modells und auf Basis von Information aus einem Flugzeug, wobei der erste Zustand in einem ersten Computer bestimmt wird, der in dem Flugzeug angeordnet ist;
- Senden der Informationen aus dem Luftfahrzeug und/oder von Information über den ersten Zustand zu einem zweiten Computer, der außerhalb des Flugzeugs angeordnet ist;
- Bestimmen eines zweiten Zustandes auf Basis eines zweiten Modells und auf Basis der Informationen aus dem Luftfahrzeug und/oder der Informationen über den ersten Zustand durch den zweiten Computer.

Eine Überwachung kann insbesondere eine Überwachung einer oder mehrerer technischer Funktionen umfassen. Des Weiteren kann eine Überwachung eine Überwachung einer oder mehrerer Strukturen eines Luftfahrzeugs umfassen. Wenn beispielsweise ein Zustand eines Luftfahrzeugs ein Zustand eines Triebwerks betrifft, dann kann eine Überwachung beispielsweise eine Schwingfrequenz des Triebwerks oder eine Schwingfrequenz einer Schaufel des Triebwerks umfassen. Ein Luftfahrzeug kann insbesondere ein Flugzeug sein. Alternativ kann ein Luftfahrzeug auch ein Hubschrauber sein. Ebenso kann ein Luftfahrzeug ein Luftschiff sein. Ein Luftfahrzeug kann alternativ auch ein Raumschiff betreffen. Im Allgemeinen kann ein Luftfahrzeug alle nicht boden- und wassergebundene Fahrzeuge umfassen. Im Folgenden werden Merkmale und Vorteile vor allem am Beispiel eines Flugzeugs offenbart. Dies soll aber nicht einschränkend zu verstehen sein.

Ein Zustand eines Luftfahrzeugs kann insbesondere ein physikalischer Zustand sein. Beispielsweise kann ein Zustand eine Temperatur eines Flugzeugs bzw. einer Komponente und/oder eines Bauteils eines Flugzeugs sein. In einer Ausführungsform können überwachte Zustände des Luftfahrzeugs eine Temperatur, ein Druck, eine Betriebsdauer oder eine Wellendrehzahl eines Triebwerks sein. Wie zuvor schon erwähnt, kann zusätzlich oder alternativ ein Zustand auch eine Schwingfrequenz einer Komponente oder eines Bauteils eines Flugzeugs sein. Ein Zustand kann auch eine positionsbasierte Information und/oder eine kraftbasierte Information betreffen. Positionsbasierte Informationen können insbesondere eine Position, ein Winkel, eine Geschwindigkeit, eine Beschleunigung und/oder ein Ruck sein. Ein Zustand kann zusätzlich oder alternativ auch ein Energiezustand des Flugzeugs umfassen, insbesondere einen Energiezustand einer Komponente und/oder eines Bauteils des Flugzeugs. Beispielsweise kann ein Energiezustand eine elektrische Ladung sein, welche in einer Batterie eines Flugzeugs gespeichert ist. Ebenso kann ein Zustand eine Kapazität eines Treibstoffs sein, welcher in einem Flugzeug gespeichert ist. Ein Zustand kann zusätzlich oder alternativ zu physikalischen Zuständen auch Zustände umfassen, welche aus verschiedenen anderen Größen zusammengesetzt sind. Des Weiteren kann ein Zustand eine Information betreffen, beispielsweise eine Information bezüglich der Einsatzzeit und/oder ein Lebenszyklusparameter eines Flugzeugs und/oder einer Komponente eines Flugzeugs.

Ein Computer kann insbesondere eine hardware- und softwarebasierte Recheneinheit sein. Beispielsweise kann ein Computer ein Mikrocontroller sein. Zusätzlich oder alternativ kann ein Computer ein handelsüblicher Computer sein. Zusätzlich oder alternativ kann ein Computer ein redundantes System aus mehreren Recheneinheiten sein, welches dazu eingerichtet ist, Ergebnisse redundant zu erzeugen und miteinander zu vergleichen, so dass sichergestellt werden kann, dass die Ergebnisse korrekt sind. Zusätzlich oder alternativ kann ein Computer eine Recheneinheit darstellen, welche einen fest eingeprägten Programmablauf oder eine fest eingeprägte Funktion aufweist. Beispielsweise kann ein Computer ein FPGA umfassen und/oder eine analoge Elektronik. Ein Computer kann außerhalb eines Flugzeugs insbesondere in einem Rechenzentrum angeordnet sein. Zusätzlich oder alternativ kann ein externer Computer auf einem Flughafen angeordnet sein. Zusätzlich oder alternativ ist ein externer Computer ein verteiltes System oder eine zentrale Steuerung. Dazu folgen später noch weitere Details.

Eine Ausführungsform des ersten Aspekts betrifft ein Verfahren, wobei die Anzahl der Rechenschritte zur Bestimmung des ersten Zustands geringer ist als die Anzahl der Rechenschritte zur Bestimmung des zweiten Zustands.

Insbesondere kann das Verfahren, welches an Bord in einem Flugzeug auf Basis des ersten Modells abläuft, ein Verfahren sein, welches eine geringere Komplexität aufweist als ein Überwachungsverfahren, welches den zweiten Zustand bestimmt und auf Basis eines zweiten Modells durchgeführt wird, welches eine höhere Komplexität aufweist als das im Flugzeug befindliche erste Modell. Insbesondere kann das zweite Modell mehr Parameter umfassen als das erste Modell. Ein Modell kann insbesondere ein physikalisches Modell sein, welches das Flugzeug bzw. eine Komponente des Flugzeugs mechanisch, thermodynamisch und elektrisch abbildet. Zusätzlich oder alternativ kann ein Modell ein statistisches Modell sein, welches einen ersten Zustand bzw. einen zweiten Zustand entsprechend statistisch abbildet. Dazu können einfache Modelle bzw. Teilmodelle dienen, welche beispielsweise auf Basis von Durchschnittswerten oder Varianzen operieren und/oder auf Basis signifikanter Abweichungen. Zusätzlich oder alternativ können statistische Modelle bzw. Teilmodelle auch auf stochastischen Zustandsschätzern beruhen und beispielsweise auf Basis von Partikelfiltern und/oder entsprechenden Wahrscheinlichkeitsverteilungen operieren.

Eine Ausführungsform des ersten Aspekts betrifft ein Verfahren, wobei ein Zustand ein Bauteil des Flugzeugs betrifft, insbesondere ein Triebwerk.

Neben einem Triebwerk kann ein Zustand auch andere Bauteile des Flugzeugs betreffen. Insbesondere kann dies ein Fahrwerk sein und/oder eine Komponente eines Fahrwerks, beispielsweise eines Reifens. Zusätzlich oder alternativ kann ein Zustand auch ein Leitwerk oder ein Ruder eines Flugzeugs betreffen. Des Weiteren kann ein Zustand auch den Rumpf eines Flugzeugs und/oder die Befensterung eines Flugzeugs betreffen. Zusätzlich oder alternativ kann ein Zustand ein oder mehrere elektrische Systeme des Flugzeugs betreffen. Zusätzlich oder alternativ kann ein Zustand ein oder mehrere hydraulische Systeme des Flugzeugs betreffen.

Eine Ausführungsform des ersten Aspekts betrifft ein Verfahren, wobei ein Zustand eine Einsatzzeit, insbesondere ein Wartungsintervall des Flugzeugs und/oder einer betreffenden Komponente, umfasst.

Eine Ausführungsform des ersten Aspekts betrifft ein Verfahren, umfassend den Schritt:
- Verändern des ersten Modells im Hinblick auf eine Struktur und/oder eine Funktion des Flugzeugs und/oder einer Komponente des Flugzeugs.

Beispielsweise wenn man einen neuen Triebwerksbauzustand einführt, kann das entsprechende Modell entsprechend der neuen Komponente angepasst werden. Dies kann insbesondere eine Anpassung einer Benutzungszeit oder ermittelte Beanspruchung der entsprechenden Komponente umfassen. Des Weiteren kann eine solche Anpassung auch eine Anpassung physikalischer Parameter umfassen, insbesondere, wenn durch die Modifikationen nicht allein ein zuvor im Flugzeug betriebenes Bauteil durch ein Bauteil mit gleichen Parametern ausgetauscht wurde, sondern ein Bauteil mit anderen Parametern zur Verwendung kommt. Dann müssen insbesondere die entsprechenden Parameter aktualisiert werden, wenn diese eine Basis des ersten Modells bilden.

Eine Ausführungsform des ersten Aspekts betrifft ein Verfahren, umfassend den Schritt:
- Verändern des zweiten Modells im Hinblick auf eine Struktur und/oder eine Funktion des Flugzeugs und/oder einer Komponente des Flugzeugs.

Für die Veränderung des zweiten Modells gilt insbesondere das gleiche, was auch für die Veränderung des ersten Modells gilt. Zusätzlich oder alternativ können bei einer entsprechenden Veränderung beide Modelle, also das erste Modell und das zweite Modell entsprechend aktualisiert werden. Dazu werden im Folgenden noch weitere Merkmale und Vorteile offenbart.

Eine Ausführungsform des ersten Aspekts betrifft ein Verfahren, wobei Veränderungen des zweiten Modells häufiger erfolgen als Veränderungen des ersten Modells.

Insbesondere können Veränderungen des zweiten Modells häufiger erfolgen, insbesondere häufiger während einer Stunde, einem Tag, einer Woche, einem Monat und/oder einem Jahr. Vorteilhaft können durch verschiedene Intervalle beispielsweise Planungen für erforderliche Wartungen des Flugzeugs bzw. entsprechender Komponenten durchgeführt werden.

Eine Ausführungsform des ersten Aspekts betrifft ein Verfahren, wobei das Verfahren die Schritte umfasst:
- Verändern des ersten Modells im Hinblick auf eine Struktur und/oder eine Funktion des Flugzeugs und/oder einer Komponente des Flugzeugs;
- Verändern des zweiten Modells im Hinblick auf eine Struktur und/oder eine Funktion des Flugzeugs und/oder einer Komponente des Flugzeugs;
und wobei die beiden Schritte synchronisiert erfolgen.

Beispielsweise kann zunächst das erste Modell angepasst werden und dann eine Aktualisierung des zweiten Modells erfolgen. Insbesondere wenn das zweite Modell komplexer ist als das erste Modell, kann eine Aktualisierung auch von einem zweiten Modell zu einem ersten Modell erfolgen, insbesondere mit komplexitätsreduzierter Information.

Gemäß einem weiteren bevorzugten Ausführungsbeispiel kann eine Synchronisation der Ergebnisse des ersten Modells und des zweiten Modells erfolgen. Während des Betriebes stehen die mit weniger Komplexität und deshalb konservativer bzw. mit höherem Sicherheitsfaktor berechneten Zustandsdaten des ersten Modells (on-board) zur Verfügung. Nach einem Flug bzw. nach einer Übertragung der Informationen über das Luftfahrzeug an das zweite Modell (offboard) kann mit höherer Komplexität die verbleibende Lebensdauer mit höherer Genauigkeit berechnet werden. Die höhere Genauigkeit des zweiten Modells (off-board) erlaubt es weniger konservativ, also mit weniger Puffer, zu rechnen. Die genaueren Ergebnisse des zweiten Modells können dann an das erste Modell (on-board) übertragen werden, um als Ausgangspunkt für die on-board Lebensdauerberechnung während des nächsten Fluges zu dienen.

Eine Ausführungsform des ersten Aspekts betrifft ein Verfahren, umfassend den Schritt:
- Bestimmen eines dritten Zustandes auf Basis eines dritten Modells, wobei die Bestimmung des dritten Zustandes nach einer Bestimmung des ersten und/oder zweiten Zustandes erfolgt.

Insbesondere kann auf Basis eines dritten Modells eine Nachbetrachtung erfolgen. Nachbetrachtungen werden insbesondere durchgeführt, um die Lebensdauern verschiedener Flugzeuge bzw. verschiedener Komponenten eines oder mehrerer Flugzeuge zu vergleichen. Dazu können insbesondere Information betreffend einen oder mehrerer erster Zustände und Information betreffend einen oder mehrerer zweiter Zustände verwendet werden. Zusätzlich oder alternativ können für Nachbetrachtungen auch Informationen verwendet werden, welche in einem Flugzeug während des Betriebs aufgezeichnet wurden und welche insbesondere zu einem späteren Zeitpunkt für die entsprechenden Nachbetrachtungen in ein externes Rechenzentrum transferiert wurden.

Eine Ausführungsform des ersten Aspekts betrifft ein Verfahren, wobei der dritte Zustand auf Basis von Informationen aus dem Flugzeug und/oder auf Basis von dem ersten und/oder zweiten Zustand bestimmt wird.

Eine Ausführungsform des ersten Aspekts betrifft ein Verfahren, wobei das Bestimmen des ersten Zustandes und/oder des zweiten Zustandes in Echtzeit erfolgt.

Unter Echtzeit kann ein Betrieb eines Computers verstanden werden, so dass ein erster Zustand und/oder ein zweiter Zustand innerhalb einer vorgegebenen Zeitspanne verfügbar sind. Alternativ kann unter Echtzeit auch verstanden werden, dass der erste und/oder der zweite Zustand im Wesentlichen sofort nach Erhalt der Eingangsdaten vorliegen.

Eine Ausführungsform des ersten Aspekts betrifft ein Verfahren, wobei das Bestimmen eines ersten Zustandes und/oder das Bestimmen eines zweiten Zustandes auf Basis komprimiert vorliegender Daten erfolgt und/oder wobei der erste Zustand und/oder der zweite Zustand nach Bestimmung in komprimierter Form abgespeichert werden.

Eine Ausführungsform des ersten Aspekts betrifft ein Verfahren, wobei das Bestimmen des ersten Zustandes und/oder des zweiten Zustandes auf jeweils einem zentralen Computer erfolgt.

Ein zweiter Aspekt der vorliegenden Offenbarung betrifft eine Vorrichtung, umfassend:
- einen Computer zum Bestimmen eines ersten Zustandes auf Basis eines ersten Modells und auf Basis von Information aus einem Flugzeug, wobei der Computer in dem Flugzeug angeordnet ist;
- eine Kommunikationseinrichtung zum Senden von Information über den ersten Zustand zu einem zweiten Computer, der außerhalb des Flugzeugs angeordnet ist,
wobei der zweite Computer dazu eingerichtet ist, einen zweiten Zustand auf Basis eines zweiten Modells und auf Basis der Informationen aus dem Luftfahrzeug und/oder der Informationen über den ersten Zustand zu bestimmen.

Insbesondere kann die Vorrichtung Strukturen und Funktionen aufweisen, um einen Schritt eines Verfahrens nach dem ersten Aspekt durchführen zu können.

Eine Ausführungsform des zweiten Aspekts betrifft eine Vorrichtung, wobei die Vorrichtung zur Ausführung eines Verfahrens nach einem der vorherigen Ansprüche eingerichtet ist.

Weitere Merkmale, Vorteile und Anwendungsmöglichkeiten der Erfindung ergeben sich aus der nachfolgenden Beschreibung im Zusammenhang mit der Figur. Es zeigt
- Fig. 1: ein Ablaufdiagramm zur Durchführung eines Verfahrens zur Überwachung eines Zustandes eines Luftfahrzeugs; und
- Fig. 2: ein Blockdiagramm zur Veranschaulichung einer Vorrichtung zur Überwachung eines Zustandes eines Luftfahrzeugs.

In der folgenden Beschreibung beziehen sich identische Bezugszeichen auf identische bzw. zumindest funktional oder strukturell ähnliche Merkmale.

In der folgenden Beschreibung wird auf die begleitenden Zeichnungen Bezug genommen, die einen Teil der Offenbarung bilden und in denen zur Veranschaulichung spezifische Aspekte gezeigt sind, in denen die vorliegende Offenbarung verstanden werden kann.

Generell gilt eine Offenbarung über ein beschriebenes Verfahren auch für eine entsprechende Vorrichtung, um das Verfahren durchzuführen oder herzustellen, oder für ein entsprechendes System, welches ein oder mehrere Vorrichtungen umfasst, und umgekehrt. Wenn beispielsweise ein spezieller Verfahrensschritt beschrieben wird, kann eine entsprechende Vorrichtung ein Merkmal umfassen, um den beschriebenen Verfahrensschritt durchzuführen, auch wenn dieses Merkmal nicht explizit beschrieben oder dargestellt ist. Wenn andererseits beispielsweise eine spezielle Vorrichtung auf der Grundlage von Funktionseinheiten und/oder Strukturmerkmalen beschrieben wird, kann ein entsprechendes Verfahren einen Schritt umfassen, der die beschriebene Funktionalität ausführt oder mit dem eine entsprechende Struktur hergestellt werden kann, auch wenn solche Schritte nicht explizit beschrieben oder dargestellt sind. Ebenso kann ein System mit entsprechenden Vorrichtungsmerkmalen versehen werden oder mit Merkmalen, um einen bestimmten Verfahrensschritt auszuführen. Merkmale der verschiedenen zuvor oder nachfolgend beschriebenen Aspekte und Ausführungsformen können miteinander kombiniert werden, sofern nicht ausdrücklich anders angegeben.

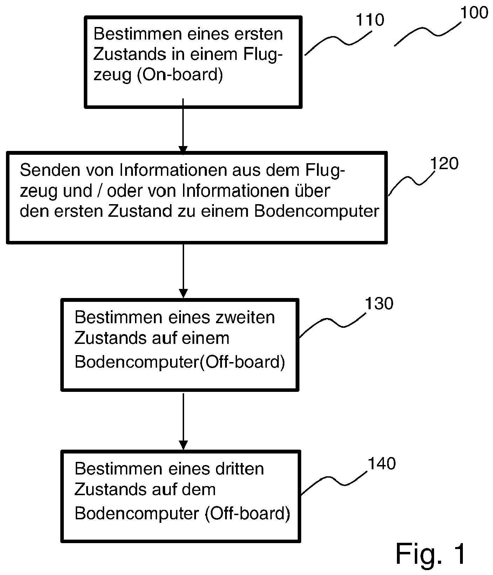

Fig. 1 zeigt ein Ablaufdiagramm zur Durchführung eines Verfahrens 100 zur Überwachung eines Zustandes eines Luftfahrzeugs. Das Verfahren kann insbesondere mit einem Schritt zum Erfassen von Informationen beginnen, welcher in Fig. 1 nicht dargestellt ist. Insbesondere auf Basis dieser erfassten Informationen erfolgt gemäß Schritt 110 ein Bestimmen eines ersten Zustandes, wobei der erste Zustand in dem Flugzeug bestimmt wird. Der erste Zustand wird auf Basis eines ersten Modells bestimmt, welches in einem Computer, welcher sich in dem ersten Flugzeug befindet, ausgeführt wird. Durch diesen Schritt wird insbesondere vorteilhaft eine autarke Berechnung eines oder mehrerer erster Zustände in dem Flugzeug ermöglicht. In einem zweiten Schritt 120 werden Informationen über den zuvor bestimmten ersten Zustand zu einem Bodencomputer bzw. einem Off-Board-Computer (hier einer Bodenstation) versendet. Diese Kommunikation kann insbesondere sofort erfolgen, nachdem ein Wert für den ersten Zustand neu berechnet wurde. Die Kommunikation kann insbesondere auch Informationen umfassen, welche eine Basis für eine Berechnung eines Wertes für den ersten Zustand bilden. Insbesondere können dies erfasste Informationen zum Flugzeug bzw. zu einer Komponente des Flugzeugs sein.

Nachdem die Informationen über den ersten Zustand von einer Bodenstation empfangen wurden, wird auf Basis dieser Informationen ein zweiter Zustand bestimmt. Dieser zweite Zustand wird in einem Off-Board-Computer bestimmt. Auf diesem Computer wird ein zweites Modell berechnet, welches das Flugzeug bzw. eine Komponente des Flugzeugs in einem höheren Detailgrad abbildet als das erste Modell. Somit umfasst der zweite Zustand mehr und insbesondere genauere Informationen zu dem Flugzeug bzw. zu einer entsprechenden Komponente des Flugzeugs.

Nachdem der zweite Zustand in Schritt 130 bestimmt wurde, wird in einem nachfolgenden Schritt 140 ein dritter Zustand bestimmt. Dieser Zustand kann insbesondere nicht auf ein einziges Flugzeug beschränkt sein, sondern Informationen über erste und zweite Zustände von mehreren Flugzeugen einbeziehen. Damit ist vorteilhaft durch die Berechnung des dritten Zustandes ein Vergleich zwischen verschiedenen Flugzeugen und oder verschiedenen Komponenten, insbesondere von verschiedenen Flugzeugen, möglich. Wenn beispielsweise als Komponente ein Triebwerk durch das erste Modell und das zweite Modell abgebildet wird, kann eine Modifikation des Triebwerks in einer entsprechenden Veränderung des ersten Modells bzw. des zweiten Modells münden. Eine solche Veränderung kann insbesondere synchron erfolgen, so dass sowohl an Bord des Flugzeugs als auch in der Bodenstation ein Zustand anhand eines ersten bzw. eines zweiten Modells berechnet werden, welche eine aktuelle Konfiguration des Flugzeugs abbilden.

Insbesondere kann eine solche Konfiguration allerdings auch allein in dem zweiten Modell abgebildet werden, zum Beispiel dann, wenn der entsprechende Parameter durch das erste Modell aufgrund seiner geringeren Komplexität gar nicht erfasst wird oder sein Ergebnis für mehrere Konfigurationen gilt. Insbesondere kann somit ein erstes Modell weniger häufig an eine aktuelle Flugzeugkonfiguration angepasst werden als ein zweites Modell.

In einer Ausführungsform des Verfahrens kann eine Ergebnissynchronisation der Modelle durch eine Logistikfunktion initiiert werden. Das zweite Modell arbeitet, wie bereits vorstehend beschrieben, typischerweise auf leistungsfähigerer Hardware und weist weniger Schnittstellen unterschiedlicher Hersteller auf, sodass ein komplexes Modell des Flugzeugs bzw. einer Komponente des Flugzeugs beispielsweise an der Bodenstation angewendet und gepflegt werden kann, welches genauere Ergebnisse liefert als das erste Modell. Folglich kann das zweite Modell weniger konservativ eingestellt bzw. mit weniger Sicherheitsfaktor/-puffer betrieben werden als das erste Modell. Bei der Ergebnissynchronisation ersetzt die Logistikfunktion das Ergebnis des ersten Modells durch das genauere Ergebnis des zweiten Modells. Vorteilhaft kann dadurch das erste Modell, insbesondere automatisch, mittels der genaueren Ergebnisse des zweiten Modells aktualisiert werden, und diese Ergebnisse des zweiten Modells als Ausgangsbasis für weitere onboard Berechnungen mittels des ersten Modells verwenden.

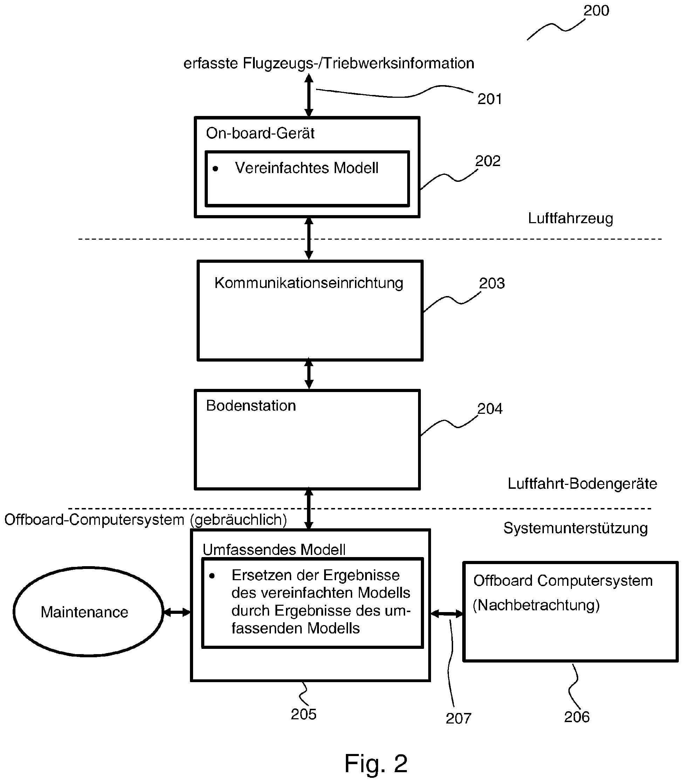

**Fig. 2** offenbart ein Blockdiagramm zur Veranschaulichung einer Vorrichtung 200 zur Überwachung eines Zustandes eines Luftfahrzeugs. Die Vorrichtung weist eine Schnittstelle 201 auf, über die erfasste Flugzeug- oder Triebwerksinformationen eingelesen werden können. Die erfassten Flugzeuginformationen können insbesondere von einem oder mehreren Sensoren kommen, welche ebenfalls von der Vorrichtung umfasst sein können. Die Vorrichtung 200 umfasst ein On-board-Gerät 202, welches sich an Bord des Flugzeugs befindet und einen Computer oder Microcontroller umfasst. Auf diesem Computer/Microcontroller werden die Rohdaten der Sensorik eingelesen und ein vereinfachtes Modell berechnet, welches ein erstes Modell darstellt. Dieses Modell liefert einen ersten Zustand über das Flugzeug bzw. über eine Komponente des Flugzeugs.

Des Weiteren umfasst die Vorrichtung eine Kommunikationseinrichtung 203, welches dazu eingerichtet ist, Informationen zwischen dem Flugzeug und bspw. einer Bodenstation 204 auszutauschen. In einer Ausführungsform kann es vorgesehen sein, dass über die Kommunikationseinrichtung 203 Rohdaten aus der Schnittstelle 201 an die Bodenstation 204 zur weiteren Verarbeitung, auf ein weiteres Computersystem 205 oder zur Nachbetrachtung in der Industrie 206 übermittelt werden. Zusätzlich oder alternativ kann über die Kommunikationseinrichtung 203 der durch das vereinfachte, erste Modell bestimmte Zustand an die Bodenstation 204 oder an die Computersysteme 205 bzw. 206 übertragen werden.

Die Bodenstation 204 übermittelt die Rohdaten und/oder Ergebnisse des ersten (on-board) Modells an ein Computersystem 205, wo über den Zustand bzw. über die verbleibende berechnete Lebensdauer des Flugzeugs bzw. der Flugzeugkomponenten Buch geführt wird. Dieses Computersystem beinhaltet ein umfassendes Modell des Flugzeugs bzw. ein umfassendes Modell einer Komponente des Flugzeugs, insbesondere eines Triebwerks, mit dem die Rohdaten und/oder Ergebnisse des ersten Modells verarbeitet werden. Zur Nachbetrachtung werden die Rohdaten und/oder die Ergebnisse des ersten (on-board) und/oder zweien Modells an die Industrie 206 weitergeleitet.

Das umfassende Modell, welches das zweite Modell darstellt, stellt eine detailreichere Abbildung des Flugzeugs bzw. der Komponente des Flugzeugs dar. Diese Details können insbesondere Parameter betreffen, welche nur vereinfacht oder gar nicht in dem ersten, vereinfachten Modell 202 des Flugzeugs abgebildet werden.

Des Weiteren steht dieses Modell bzw. der Computer (205), auf dem das umfassende Modell berechnet wird, mit einem weiteren Computer (206) in Verbindung, der dazu eingerichtet ist, eine Nachbetrachtung von berechneten Zuständen des Flugzeugs durchzuführen. Eine solche Nachbetrachtung bezieht insbesondere Zustände von anderen Flugzeugen mit ein und kann somit insbesondere zur Identifikation von Fehlern bzw. zur Identifikation eines Wartungsbedarfs eines bestimmten Flugzeugs bzw. einer bestimmten Komponente eines Flugzeugs herangezogen werden.

Das genauere Ergebnis des zweiten / umfassenden Modells aus dem Computersystem 205 oder 206 wird anschließend an die Logistik-/Buchführungsfunktion in 205 übermittelt, wo dieses Ergebnis dann anstelle des Ergebnisses des vereinfachten/ersten Modells geführt wird. Vom Computersystem 205 wird dann das Ergebnis des zweiten / umfassenden Modells über die Kommunikationseinrichtung 203 an das On-Board-Gerät 202 übertragen, wo es als neue, genauere Ausgangsbasis für Berechnungen mit dem ersten Modell verwendet wird.

Des Weiteren weist das Computersystem 205 und 206 eine Schnittstelle 207 auf, über die Modifikationen der Modelle in den Computern 205 und 202 implementiert werden können. Diese Modifikation können sich beispielsweise dann ergeben, wenn das Flugzeug bezüglich seiner Hardware oder Software modifiziert wird, also wenn sich ein neuer Bauzustand des Triebwerks ergibt.

### BEZUGSZEICHENLISTE

- 100: Verfahren zur Überwachung eines ersten Zustandes eines Flugzeugs
- 110-140: Verfahrensschritte
- 200: Vorrichtung zur Überwachung eines Zustands eines Flugzeugs
- 201: Schnittstelle zum vereinfachten Modell
- 202: On-board-Gerät
- 203: Kommunikationseinrichtung
- 204: Bodenstation
- 205: Off-board Computersystem (gebräuchlich)
- 206: Off-board Computersystem (Nachbetrachtung)
- 207: Schnittstelle zur Modifikation des vereinfachten und umfassenden Modells

## Patentansprüche

1. Verfahren (100) zur Überwachung eines Zustandes eines Luftfahrzeugs, umfassend die Schritte:
- Bestimmen (110) eines ersten Zustandes auf Basis eines ersten Modells (202) und auf Basis von Information aus einem Luftfahrzeug (201), wobei der erste Zustand in einem ersten Computer bestimmt wird, der in dem Luftfahrzeug angeordnet ist;
- Senden (120) der Informationen aus dem Luftfahrzeug (201) und/oder von Information über den ersten Zustand zu einem zweiten Computer, der außerhalb des Luftfahrzeugs angeordnet ist;
- Bestimmen (130) eines zweiten Zustandes auf Basis eines zweiten Modells (205) und auf Basis der Informationen aus dem Luftfahrzeug (201) und/oder der Informationen über den ersten Zustand durch den zweiten Computer.

2. Verfahren nach Anspruch 1, **dadurch gekennzeichnet, dass** die Anzahl der Rechenschritte zur Bestimmung des ersten Zustands (110) geringer ist als die Anzahl der Rechenschritte zur Bestimmung des zweiten Zustands.

3. Verfahren nach wenigstens einem der vorherigen Ansprüche, **dadurch gekennzeichnet, dass** einer der Zustände ein Bauteil des Luftfahrzeugs betrifft, insbesondere ein Triebwerk.

4. Verfahren nach wenigstens einem der vorherigen Ansprüche, **dadurch gekennzeichnet, dass** ein Zustand eine Einsatzzeit, insbesondere ein Wartungsintervall des Luftfahrzeugs und/ oder einer betreffenden Komponente, betrifft.

5. Verfahren nach wenigstens einem der vorherigen Ansprüche, umfassend den Schritt:
- Verändern des ersten Modells (202) im Hinblick auf eine Struktur und/oder eine Funktion des Luftfahrzeugs und/oder einer Komponente des Luftfahrzeugs.

6. Verfahren nach wenigstens einem der vorherigen Ansprüche, umfassend den Schritt:
- Verändern des zweiten Modells (205) im Hinblick auf eine Struktur und/oder eine Funktion des Luftfahrzeugs und/oder einer Komponente des Luftfahrzeugs.

7. Verfahren nach wenigstens einem der vorherigen Ansprüche, **dadurch gekennzeichnet, dass** Veränderungen des zweiten Modells (205) häufiger erfolgen als Veränderungen des ersten Modells (202).

8. Verfahren nach wenigstens einem der vorherigen Ansprüche, wobei das Verfahren die Schritte umfasst:
- Verändern des ersten Modells (202) im Hinblick auf eine Struktur und/oder eine Funktion des Luftfahrzeugs und/oder einer Komponente des Luftfahrzeugs;
- Verändern des zweiten Modells (205) im Hinblick auf eine Struktur und/oder eine Funktion des Luftfahrzeugs und/ oder einer Komponente des Luftfahrzeugs;
und wobei die beiden Schritte synchronisiert erfolgen.

9. Verfahren nach wenigstens einem der vorherigen Ansprüche, umfassend den Schritt:
- Bestimmen eines dritten Zustandes (140) auf Basis eines dritten Modells (206), wobei die Bestimmung des dritten Zustandes nach einer Bestimmung des zweiten Zustandes erfolgt.

10. Verfahren nach dem vorherigen Anspruch, **dadurch gekennzeichnet, dass** der dritte Zustand auf Basis von Informationen aus dem Luftfahrzeug (201) und/ oder auf Basis von dem ersten Zustand und/ oder auf Basis von dem zweiten Zustand bestimmt wird.

11. Verfahren nach wenigstens einem der vorherigen Ansprüche, **dadurch gekennzeichnet, dass** das Bestimmen des ersten Zustandes (110) und/ oder des zweiten Zustandes (130) in Echtzeit erfolgt.

12. Verfahren nach wenigstens einem der vorherigen Ansprüche, **dadurch gekennzeichnet, dass** der zweite Zustand, der mittels des zweiten Modells (205) bestimmt wurde, auf das erste Modell (202) übertragen wird und als Grundlage für eine darauffolgende Bestimmung des ersten Zustands mittels des ersten Modells (202) verwendet wird.

13. Verfahren nach wenigstens einem der vorherigen Ansprüche, **dadurch gekennzeichnet, dass** das Bestimmen des ersten Zustandes (110) und/ oder des zweiten Zustandes (130) auf jeweils einem zentralen Computer erfolgt.

14. Vorrichtung zur Überwachung eines Zustandes eines Luftfahrzeugs, umfassend:
- einen Computer zum Bestimmen eines ersten Zustandes auf Basis eines ersten Modells (202) und auf Basis von Information aus einem Luftfahrzeug, wobei der Computer in dem Luftfahrzeug angeordnet ist;
- eine Kommunikationseinrichtung (203) zum Senden der Informationen aus dem Luftfahrzeug und/oder von Information über den ersten Zustand zu einem zweiten Computer, der außerhalb des Luftfahrzeugs angeordnet ist,
wobei der zweite Computer dazu eingerichtet ist, einen zweiten Zustand auf Basis eines zweiten Modells (205) und auf Basis der Informationen aus dem Luftfahrzeug und/oder der Informationen über den ersten Zustand zu bestimmen.

15. Vorrichtung nach dem vorherigen Anspruch, **dadurch gekennzeichnet, dass** die Vorrichtung zur Ausführung eines Verfahrens nach wenigstens einem der vorherigen Ansprüche eingerichtet ist.

16. Vorrichtung nach den vorherigen Ansprüchen, **dadurch gekennzeichnet, dass** die Verfahren an einer Schnittstelle (207) übermittelt werden.
